# EUROPEAN PATENT APPLICATION

(11) **EP 4 596 234 A1**
(43) Date of publication of application: **06.08.2025**
(21) Application number: 23881763.9
(22) Date of filing: 23.10.2023
(51) Int. Cl.: B32B 17/00, B32B 17/10, B32B 3/08, B32B 27/00, B32B 27/36, B32B 27/30, B32B 27/40, B32B 7/12, B60J 1/00, C03C 27/12

(54) **LAMINATED GLASS WITH DIFFERENT VISIBLE-LIGHT TRANSMITTANCES**

(30) Priority: 24.10.2022 CN 202211301927
(71) Applicant: Fuyao Glass Industry Group Co., Ltd., Fuqing, Fujian 350300 (CN)
(72) Inventor: CHEN, Bingjing, Fuqing, Fujian 350300 (CN); LI, Weijun, Fuqing, Fujian 350300 (CN); GUAN, Jinliang, Fuqing, Fujian 350300 (CN); LIAO, Shaohua, Fuqing, Fujian 350300 (CN)
(74) Representative: Patentanwälte Olbricht Buchhold Keulertz
(86) International application number: PCT/CN2023/125831
(87) International publication number: WO 2024/088185

(57) **Abstract**

Disclosed in the present invention is laminated glass with different visible-light transmittances. The laminated glass comprises: an outer glass plate, which has a first surface and a second surface, which are opposite each other; an inner glass plate, which has a third surface and a fourth surface, which are opposite each other; a thermoplastic intermediate layer, which is sandwiched between the inner glass plate and the outer glass plate and configured to bond the second surface to the third surface, wherein at least part of an edge portion of the outer glass plate extends beyond the inner glass plate to form a single-layer glass area, which comprises at least one light-transmitting functional area. The laminated glass can serve as the front/rear windshield of a vehicle and solve, by means of a staggered structural design, the technical problem of optical distortion in optical assemblies caused by laminated glass.

## Description

This application claims priority to Chinese Patent Application No. 202211301927.X, filed with the State Intellectual Property Office of China on October 24, 2022 and entitled "LAMINATED GLASS WITH DIFFERENT VISIBLE LIGHT TRANSMITTANCES", which is incorporated herein by reference in its entirety.

### TECHNICAL FIELD

The present invention relates to the technical field of glass products, and specifically to a laminated glass with different visible light transmittances.

### BACKGROUND ART

With the popularization of intelligent technology in automobiles, optical components, such as camera sensors of various functions or brake light, are usually required to be installed on laminated glass as a front windshield or a rear windshield; for such optical components, they generally need to send or receive optical signals during operation.

The laminated glass itself is formed by combination of two layers of glass panes, so the incident light will be refracted on the inner and outer glass pane, respectively, resulting in ghosting, which in turn affects the resolution of the optical signals sent or received by the optical components. In addition, the light of the optical components needs to pass through at least two layers of glass pane during operation. Since the glass pane generally need to undergo a heating treatment process such as heating and bending, sintering, and the like, the glass pane itself are susceptible to certain optical quality problems during the heating treatment process, and the composite of the two layers of glass pane is more susceptible to unpredictable optical distortions compared to a single layer of the glass pane, thereby affecting the resolution of the imaging.

### SUMMARY OF THE INVENTION

The purpose of the present invention is to provide a laminated glass with different visible light transmittance, which can solve the technical problem of light distortion to the optical components caused by the laminated glass in a simple and convenient way; and further embodiments can also accomplish the effect of protecting the privacy and comfort inside the car without affecting the function of the optical components such as brake light and cameras.

In order to achieve the above purposes, the present invention utilizes the following technical solutions:
A laminated glass with different visible light transmittances, wherein the laminated glass comprises an outer glass pane, a thermoplastic interlayer and an inner glass pane;
the outer glass pane has a first surface and a second surface opposite to each other; the inner glass pane has a third surface and a fourth surface opposite to each other;
the thermoplastic interlayer is interposed between the outer glass pane and the inner glass pane for bonding the second surface and the third surface;
at least a portion of the edge part of the outer glass pane extends beyond the inner glass pane, and the extended portion is a single-layered glass region; and the single-layered glass region comprises at least a light transmitting functional region.

The laminated glass of the present invention can be used as a front windshield or a rear windshield of an automobile; the inner and outer glass pane utilize a misaligned structure design in which the outer glass pane extends beyond the inner glass pane to form a single-layered glass region, and a light transmitting functional region is provided on the inner side of the single-layered glass region (the second surface of the outer glass pane) for the installation of optical components such as brake light and cameras, in order to avoid light distortion and to satisfy the light-transmitting requirements of such devices; other regions of the laminated glass are double-layered glass, which can achieve other functional requirements, such as providing colored regions or colored films to satisfy the requirement for appearance and privacy protection inside the car.

According to the laminated glass of the present invention, preferably, the single-layered glass region is provided with a first masking layer on the second surface other than the light transmitting functional region; the third and/or fourth surface of the inner glass pane is provided with or without a second masking layer, which is generally provided surround the circumference, or may be provided according to the practical needs. The masking layer is used to mask circuits and connecting components and the like at the edge of the laminated glass to provide an aesthetic effect.

According to the laminated glass of the present invention, preferably, the material for the first masking layer and the second masking layer is ceramic ink or UV ink.

According to the laminated glass of the present invention, preferably, the first masking layer and second masking layer have a visible light transmittance of ≤1.5% and a UV transmittance of ≤0.05%.

According to the laminated glass of the present invention, at least a portion of the edge part of the outer glass pane extends beyond the inner glass pane to form the single-layered glass pane region; "extends beyond" means that the outer glass pane is larger than the inner glass pane in size, and the extended portion may be the entire circumference or a portion of the edge part. Preferably, at least a portion of the edge part at one side of the outer glass pane extends beyond the inner glass pane to form the single-layered glass region, and the extended portion may be the entire edge part of that side of the outer glass pane or a portion of the edge part of that side. When the laminated glass of the present invention is used as a front or rear windshield, the edge part of that side is preferably at the top edge of the glass.

According to the laminated glass of the present invention, in the single-layered glass region, in a direction from the edge of the outer glass pane to the edge of the inner glass pane: the distance from the edge of the outer glass pane to the edge of the inner glass pane is d, the distance from the edge of the outer glass pane to the outer edge of the light transmitting functional region is d1, the distance from the outer edge to the inner edge of the light transmitting functional region is d2, and the distance from the inner edge of the light transmitting functional region to the edge of the inner glass pane is d3; and d = d1 + d2 + d3.

Preferably, d1 is 10 mm-150 mm. More preferably, d1 is 20 mm-50 mm or 10 mm-50 mm. Specifically, when the laminated glass is used as a front windshield with a colored region, d1 is 20 mm-50 mm; and when the laminated glass is used as a rear windshield, d1 is 10 mm-50 mm.

Preferably, d2 is 20 mm-150 mm. More preferably, d2 is 30 mm-80 mm or 10 mm-35 mm. Specifically, when the laminated glass is used as a front windshield with a colored region, d2 is 30 mm-80 mm; and when the laminated glass is used as a rear windshield, d2 is 10 mm-35 mm.

Preferably, d3 is 0-50 mm. When d3 is 0, the light transmitting functional region is in close proximity to the edge of the inner glass pane; and when d3 is not 0, the light transmitting functional region is not contacted with the edge of the inner glass pane, and no contact is more preferable. More preferably, d3 is 3 mm-20 mm or 3 mm-10 mm. Specifically, when the laminated glass is used as a front windshield with a colored region, d3 is 3 mm-20 mm; and when the laminated glass is used as a rear windshield, d3 is 3 mm-10 mm.

Preferably, the laminated glass according to the present invention comprises a colored region located in a region no overlapping with the single-layered glass region. The colored region is provided to block out sunlight and to secure privacy inside the car. The colored region can be achieved by attaching a colored film or by utilizing a thermoplastic polymer, such as PVB, with a different color and/or light transmittance in the thermoplastic interlayer.

More preferably, the colored region is located in a part of the thermoplastic interlayer. Further preferably, the material for the colored region is a dark-colored PVB with a visible light transmittance of ≤ 10% or a light-colored PVB with a visible light transmittance of 10%-70%; and the material of the thermoplastic interlayer other than the colored region is a colorless PVB with a visible light transmittance of ≥ 70%.

According to the laminated glass of the present invention, preferably, the outer glass pane has been subjected to hot bending molding at 500°C or higher.

According to the laminated glass of the present invention, preferably, the inner glass pane has been subjected to hot bending molding at 500°C or higher.

The stiffness of the laminated glass is directly related to the thickness of the outer glass pane. Under the same process conditions (fully tempered, semi-tempered, heat strengthened, and the like), the outer glass pane of the present invention preferably has a thickness greater than the thickness of the inner glass pane in order to ensure the stiffness of the entire combined laminated glass. The thickness of the outer glass pane is preferably ≥ 1.6 mm, for example 1.6 mm, 2.1 mm, 2.6 mm, 3.2 mm, 3.5 mm, 4.0 mm, 4.5 mm or 5.0 mm, and the like; more preferably 3.2 mm, 3.5 mm, 4.0 mm, 4.5 mm or 5.0 mm; and further preferably 5.0 mm. The thickness of the inner glass pane is preferably 0.7 mm-2.6 mm, more preferably 0.7 mm-2.1 mm, for example 0.7 mm, 1.1 mm, 1.6 mm, 1.8 mm or 2.1 mm, and the like; and further preferably 0.7 mm or 1.1 mm.

According to the laminated glass of the present invention, preferably, the outer glass pane is selected from a clear glass with a visible light transmittance of 85%-93%, a green glass with a visible light transmittance of 73%-88%, a solar green glass with a visible light transmittance of 70%-85.5%, or a light-gray or a dark green glass with a visible light transmittance of 25%-50%. More specifically, when the laminated glass of the present invention is used as a front windshield, the outer glass pane is selected from a clear glass with a visible light transmittance of 85%-93%, a conventional green glass with a visible light transmittance of 73%-88%, or a solar green glass with a visible light transmittance of 70%-85.5%; and when the laminated glass of the present invention is used as a rear windshield, the outer glass pane is selected from a clear glass with a visible light transmittance of 85%-93%, a conventional green glass with a visible light transmittance of 73%-88%, a solar green glass with a visible light transmittance of 70%-85.5%, or a light-gray or a dark green glass with a visible light transmittance of 25%-50%.

According to the laminated glass of the present invention, preferably, the inner glass pane is selected from a clear glass with a visible light transmittance of 85%-93%, a green glass with a visible light transmittance of 73%-88%, a solar green glass with a visible light transmittance of 70%-85.5%, a light-gray or a dark green glass with a visible light transmittance of 25%-50%, or a dark-gray or a dark green glass with a visible light transmittance of ≤25%.

In the laminated glass of the present invention, the thermoplastic interlayer is interposed between the outer glass pane and the inner glass pane for bonding the second and the third surface. The thermoplastic interlayer may be a single layer or two or more layers; for example, when there are two or more layers, one of the layers has a higher plasticizer content and thus has a sound insulation function, or one of the layers has a wedge shape and thus has a head-up display (HUD) function, and the like. In addition, the thermoplastic interlayer may have other functions, such as providing at least one colored region to reduce the interference of sunlight on human eyes, or adding an infrared absorber to have a sun protection or heat insulation function.

According to the laminated glass of the present invention, preferably, the material of the thermoplastic interlayer is selected from polycarbonate (PC), polyvinyl chloride (PVC), polyvinyl butyral (PVB), ethylene vinyl acetate (EVA), polyacrylate (PA), polymethylmethacrylate (PMMA), polyurethane (PUR), ionic polymer films (SGP), and the like, and more preferably polyvinyl butyral (PVB). When the colored region is provided in a portion of the thermoplastic interlayer, the material for the colored region is selected from a dark-colored PVB with a visible light transmittance of ≤10%, or a light-colored PVB with a visible light transmittance of 10%-70%, which can provide a shading effect, thereby reducing the interference of the sunlight on human eyes; and the material of the thermoplastic interlayer other than the colored region is colorless PVB with a visible light transmittance of ≥70%, which can ensure the driver's field of vision and not affect the safety of the driver. Also, the color of the colored region may be gray, green, blue or brown, preferably gray or green, and more preferably gray.

According to the laminated glass of the present invention, preferably, the thermoplastic interlayer has a thickness of 0.3 mm-2.3 mm, for example, 0.38 mm, 0.51 mm, 0.76 mm, 1.9 mm (three layers in total, each having a thickness of 0.76 mm, 0.38 mm and 0.76 mm, respectively), 1.52 mm (three layers in total, each having a thickness of 0.76 mm, 0.38 mm and 0.38 mm, respectively) and the like, more preferably 0.38 mm or 0.76 mm, and further preferably 0.76 mm.

In a preferred embodiment of the present invention, the laminated glass is used as a front windshield;
the light transmitting functional region is mounted with a camera; the single-layered glass region is provided with a first masking layer on the second surface other than the light transmitting functional region;
the outer glass pane is a clear glass with a visible light transmittance of 85%-93%, a green glass with a visible light transmittance of 73%-88%, or a solar green glass with a visible light transmittance of 70%-85.5%; such visible light transmittance ensures that the light path of the camera passes through the outer glass pane and ensures the normal operation of the camera;
a portion of the thermoplastic interlayer is a colored region, and the material for the colored region is a dark-colored PVB with a visible light transmittance of ≤10% or a light-colored PVB with a visible light transmittance of 10%-70%, which can provide a shading effect, thereby reducing the interference of sunlight on human eyes; and the material for the non-colored region is a colorless PVB with a visible light transmittance of ≥70%, which can ensure the driver's field of vision and not affect the safety of the driver; and
the inner glass pane is a clear glass with a visible light transmittance of 85%-93%, a green glass with a visible light transmittance of 73%-88%, or a solar green glass with a visible light transmittance of 70%-85.5%; the fourth surface of the inner glass pane may be provided with or without a second masking layer.

In a preferred embodiment of the present invention, the laminated glass is used as a rear windshield;
the light transmitting functional region is mounted with a camera and/or a brake light; the single-layered glass region is provided with a first masking layer on the second surface other than the light transmitting functional region;
when the light transmitting functional region is mounted with a camera, the outer glass pane is a clear glass with a visible light transmittance of 85%-93%, a green glass with a visible light transmittance of 73%-88%, or a solar green glass with a visible light transmittance of 70%-85.5%; such visible light transmittance ensures that the light path of the camera passes through the outer glass pane and ensures the normal operation of the camera;
when the light transmittance functional region is mounted with a brake light, the outer glass pane is a clear glass with a visible light transmittance of 85%-93%, a green glass with a visible light transmittance of 73%-88%, a solar green glass with a visible light transmittance of 70%-85.5%, a gray glass or a dark green glass with a visible light transmittance of 25%-40%, or a light-gray or a dark green glass with a visible light transmittance of 40%-65%;
the material of the thermoplastic interlayer is a dark-colored PVB with a visible light transmittance of ≤10%, a light-colored PVB with a visible light transmittance of 10%-70%, or a colorless PVB with a visible light transmittance of ≥70%;
the inner glass pane is a clear glass with a visible light transmittance of 85%-93%, a green glass with a visible light transmittance of 73%-88%, a solar green glass with a visible light transmittance of 70%-85.5%, a gray glass or a dark green glass with a visible light transmittance of 25%-50%, a dark-gray or a dark green glass with a visible light transmittance of ≤25%;
when the thermoplastic interlayer is a colored PVB with a visible light transmittance of ≤70%, the inner glass pane is a colored glass or a clear glass with a visible light transmittance of ≥70%, preferably a green glass with a visible light transmittance of 73%-88%, and more preferably a solar green glass with a visible light transmittance of 70%-85.5%;
when the thermoplastic interlayer is colorless PVB with a visible light transmittance of ≥70%, the inner glass pane is a colored glass with a visible light transmittance of ≤70%, preferably a gray glass or a dark green glass with a visible light transmittance of 25%-50%; the fourth surface of the inner glass pane may be provided with or without a second masking layer.

By the misaligned design, the laminated glass of the present invention can solve the technical problem of light distortion to the optical components caused by the laminated glass in a simple and convenient way, which only requires a portion of the edge part of the outer glass pane extends beyond the inner glass pane. The further provision of the colored region and the selection of glass substrates with different visible light transmittances accomplish the effect of achieving different visible light transmittance on the one glass window, which not only protects the privacy and comfort inside the car, but also the functions of the optical components such as brake light and cameras are not affected.

### BRIEF DESCRIPTION OF THE DRAWINGS

FIG. 1 is a schematic diagram of the structure of the laminated glass with different visible light transmittances in a preferred embodiment of the present invention.
FIG. 2 is a front view of the laminated glass in a preferred embodiment of the present invention.
FIG. 3 is a scatter plot of the deformation of different laminated glass combinations after impact.
FIG. 4 is a schematic diagram of a preferred structure of the laminated glass of the present invention as a front windshield with a colored region.
FIG. 5 is a schematic diagram of a preferred structure of the laminated glass of the present invention as a rear windshield.

Description of references signs:
1-outer glass pane, 11-first surface, 12-second surface;
2-thermoplastic interlayer, 21-colored region in the thermoplastic interlayer, 22-non-colored region in the thermoplastic interlayer;
3-inner glass pane, 31-third surface, 32-fourth surface;
41-first masking layer, 42-second masking layer;
51-single-layered glass region, 52-light transmitting functional region;
6-camera, brake light;
7-colored region.

### DETAILED DESCRIPTION OF EMBODIMENTS

In order to illustrate the present invention more clearly, the invention is further described below in connection with preferred embodiments. It should be understood by those skilled in the art that the following specific descriptions are illustration rather than limitation and should not be used to limit the scope of the present invention.

By the misaligned design, the laminated glass of the present invention is made to have a single-layered glass region and a double-layered glass region, which solves the problem of light distortion and ensures its transmittance by setting the mounting position of cameras and other optical components working with transmission spectrum in the single-layered glass region; and the double-layered glass region may be designed to have different visible light transmittances to achieve the effect of, for example, shading, securing the privacy and appearance, without affecting the functionality of the devices working with the transmission spectrum.

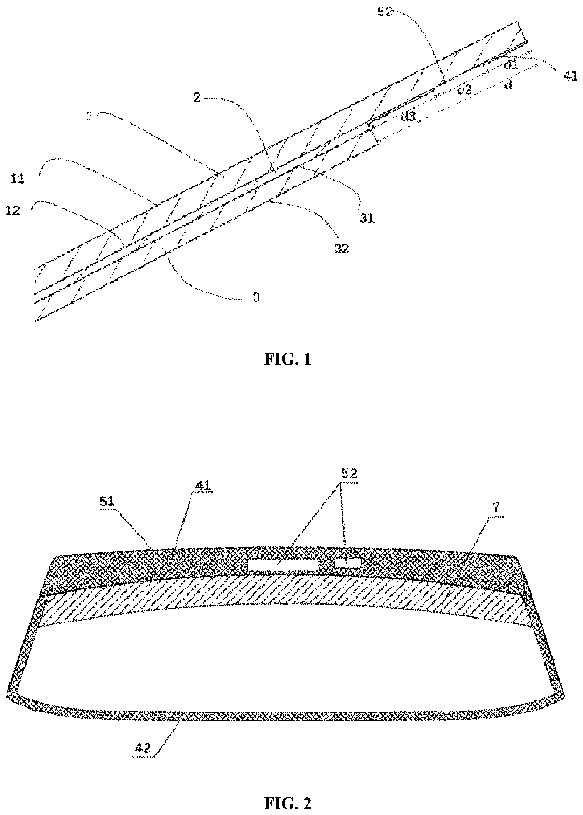

The present invention provides a laminated glass with different visible light transmittances. As shown in FIG. 1, it comprises an outer glass pane 1, a thermoplastic interlayer 2 and an inner glass pane 3;
the outer glass pane 1 has a first surface 11 and a second surface 12 opposite to each other; the inner glass pane 3 has a third surface 31 and a fourth surface 32 opposite to each other;
the thermoplastic interlayer 2 is interposed between the outer glass pane 1 and the inner glass pane 3 for bonding the second surface 12 and third surface 31.

As shown in FIG. 2, at least a portion of the edge part of the outer glass pane 1 extends beyond the inner glass pane 3, the extended portion is a single-layered glass region 51, and the single-layered glass region 51 comprises at least a light transmitting functional region 52. The extended portion may be the entire circumference or a portion of the edge part. As shown in FIGs. 1 and 2, for example, the edge part at one side of the outer glass pane 1 extends beyond the inner glass pane 3 to form the single-layered glass region 51; and when such laminated glass is used as a front or rear windshield, the edge part of that side is preferably located at the top edge of the windshield.

Preferably, as shown in FIG. 2, the single-layered glass region 51 is provided with a first masking layer 41 on the second surface 12 other than the light transmitting functional region 52. In addition, in certain embodiments, the first masking layer 41 may also extend in the second surface 12 other than the single-layered glass region 51 of the outer glass pane 1 and is provided along the edge of the region other than the single-layered glass region 51 of the outer glass pane 1.

In addition, a second masking layer 42 may or may not be provided on the third surface 31 or the fourth surface 32 of the inner glass pane 3, and the second masking layer 42 is generally provided around the edge of the inner glass pane 3, or may be provided according to the practical needs. The first masking layer 41 and the second masking layer 42 are used to mask circuits and connecting components and the like at the edge of the laminated glass for an aesthetic effect. Preferably, the material for the first masking layer 41 and the second masking layer 42 is a ceramic ink or ultraviolet ink. Preferably, the first masking layer 41 and the second masking layer 42 have a visible light transmittance of less than or equal to 1.5% and a UV transmittance of less than or equal to 0.05%.

In the single-layered glass region 51, in a direction from the edge of the outer glass pane 1 to the edge of the inner glass pane 3: the distance from the edge of the outer glass pane 1 to the edge of the inner glass pane 3 is d, the distance from the edge of the outer glass pane 1 to the outer edge of the light transmitting functional region 52 is d1, the distance from the outer edge to the inner edge of the light transmitting functional region 52 is d2 (when such laminated glass is used as a front windshield or a rear windshield, d2 is the height of the window of the devices mounted thereon), and the distance from the inner edge of the light transmitting functional region 52 to the edge of the inner glass pane 3 is d3; d = d1 + d2 + d3. d1 is 10 mm-150 mm; preferably, d1 is 20 mm-50 mm or 10 mm-50 mm. Specifically, when the laminated glass is used as a front windshield, d1 is 20 mm-50 mm; and when the laminated glass is used as a rear windshield, d1 is 10 mm-50 mm. d2 is 20 mm-150 mm; preferably, d2 is 30 mm-80 mm or 10 mm-35 mm. Specifically, when the laminated glass is used as a front windshield, d2 is 30 mm-80 mm; and when the laminated glass is used as a rear windshield, d2 is 10 mm-35 mm; d3 is 0-50 mm; when d3 is 0, the light transmitting functional region 53 is in close proximity to the edge of the inner glass pane 3; and when d3 is not 0, as shown in FIG.1, the light transmitting functional region 52 is not contacted with the edge of the inner glass pane 3. More preferably, d3 is 3 mm-20 mm or 3 mm-10 mm. Specifically, when the laminated glass is used as a front windshield, d3 is 3 mm-20 mm; and when the laminated glass is used as a rear windshield, d3 is 3 mm-10 mm.

Preferably, the outer glass pane 1 and the inner glass pane 3 have been subjected to hot bending molding at 500°C or higher. The stiffness of the laminated glass is directly related to the thickness of the outer glass pane 1. Under the same process conditions (fully tempered, semi-tempered, heat strengthened, and the like), the outer glass pane 1 of the present invention preferably has a thickness greater than the thickness of the inner glass pane 3 in order to ensure the stiffness of the entire combined laminated glass. The thickness of the outer glass pane 1 is preferably ≥ 1.6 mm, for example 1.6 mm, 2.1 mm, 2.6 mm, 3.2 mm, 3.5 mm, 4.0 mm, 4.5 mm or 5.0 mm, and the like; preferably 3.2 mm, 3.5 mm, 4.0 mm, 4.5 mm or 5.0 mm; and further preferably 5.0 mm. The thickness of the inner glass pane 3 is preferably 0.7 mm-2.6 mm, more preferably 0.7 mm-2.1 mm, for example 0.7 mm, 1.1 mm, 1.6 mm, 1.8 mm or 2.1 mm, and the like; and further preferably 0.7 mm or 1.1 mm.

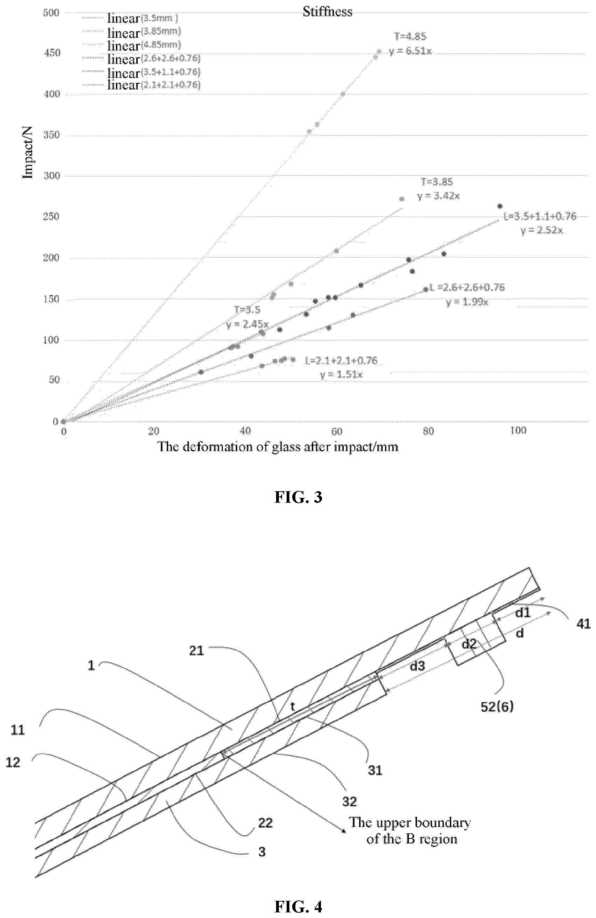

In the embodiment as shown in FIG. 3, the inner and outer glass pane may have an asymmetric configuration of thickness, in which the asymmetric type laminated glass combination of 3.5 mm outer glass pane + 1.1 mm inner glass pane + 0.76 mm interlayer (L = 3.5 + 1.1 + 0.76 in FIG. 2) has a total thickness of 5.36 mm, while symmetric type laminated glass combination of 2.6 mm outer glass pane + 2.6 mm inner glass pane + 0.76 mm interlayer (L=2.6+2.6+0.76 in Fig. 3) has a total thickness of 5.96 mm. By comparing these two, the asymmetric type laminated glass combination with a total thickness of 5.36 mm has a total thickness less than that of the symmetric type laminated glass combination with a total thickness of 5.96 mm, but the stiffness of the former is significantly better than that of the latter. Thus, the asymmetric type laminated glass combination enables high strength while maintaining light weight. Furthermore, in terms of the present invention, the use of a thicker outer glass pane enables the strength of the single-layered glass region to be greatly increased to satisfy the usage requirements.

In addition, in the embodiment shown in FIG. 3, both of the inner glass and the outer glass used in the laminated glass combination are non-tempered glass, and the strength of the inner glass or the outer glass alone is much lower than that of the tempered glass of the same thickness. By contrast, in the present invention, by setting up a reasonable glass combination, the asymmetric type laminated glass combination (L=3.5+1.1+0.76 in FIG. 2) with an outer glass pane of 3.5 mm + an inner glass pane of 1.1 mm + an interlayer of 0.76 mm is made to have strength comparable to a single piece of tempered glass (T=3.5 in FIG. 3) having a thickness of 3.5 mm.

Preferably, as shown in FIG. 2, the laminated glass further comprises a colored region 7 to achieve the effect of shading the sunlight and securing privacy inside the car; the colored region 7 is located in a region not overlapping with the single-layered glass region of glass region 51, which can be achieved by attaching a colored film, or by utilizing a thermoplastic polymer material (such as PVB, PVC, PC, EVA, or the like) with a different color and/or transmittance as a thermoplastic interlayer such that at least a portion of the colored region is present on the thermoplastic interlayer. More preferably, the colored region 7 is a part of the thermoplastic interlayer; for example, the colored region 21 in the thermoplastic interlayer in FIG. 4. Further preferably, the material for the colored region 21 in the thermoplastic interlayer is a dark PVB with a visible light transmittance of ≤10% or a light PVB with a visible light transmittance of 10%-70%; the material for the non-colored region 22 in the thermoplastic interlayer is a colorless PVB with visible light transmission of ≥70%.

When the laminated glass is used as a front windshield with a colored region, the colored region reduces the visible light transmittance of the glass. Although it is able to block the sunlight, at the same time, it also blocks the light path of the camera on the front windshield, such that the camera is unable to operate normally. When the laminated front windshield does not have a colored region, the visible light transmission would reach more than 70%, which does not affect the work of the camera, but it fails to shade the sunlight. When the laminated glass is used as a laminated rear windshield with a colored film, it may have an aesthetic function and a function of protecting the privacy of drivers and passengers. However, since the colored film reduces the visible light transmission, the light path of the brake light on the rear windshield cannot be transmitted out clearly. When the laminated rear windshield does not have a colored film, it will not affect the transmission of the light path of the brake light on the rear windshield. However, it also fails to have an aesthetics function nor protecting privacy inside the car. In the present invention, since there is a single-layered glass region, the adverse effect of the colored region on the optical components is prevented by providing the optical components such as cameras, sensors or brake light on the single-layered glass region, and the colored region itself can achieve the function of shading the sunlight or protecting privacy without affecting the transmission of optical signals of the optical components.

The outer glass pane 1 is selected from a clear glass with a visible light transmittance of 85%-93%, a green glass with a visible light transmittance of 73%-88%, a solar green glass with a visible light transmittance of 70%-85.5%, or a light-gray or a dark green glass with a visible light transmittance of 25%-50%. More specifically, when the laminated glass of the present invention is used as a front windshield, the outer glass pane 1 is selected from a clear glass with a visible light transmittance of 85%-93%, a conventional green glass with a visible light transmittance of 73%-88%, or a solar green glass with a visible light transmittance of 70%-85.5%; when the laminated glass of the present invention is used as a rear windshield, the outer glass pane 1 is selected from a clear glass with a visible light transmittance of 85%-93%, a conventional green glass with a visible light transmittance of 73%-88%, a solar green glass with a visible light transmittance of 70%-85.5%, or a light-gray or a dark green glass with a visible light transmittance of 25%-50%.

The inner glass pane 3 is selected from a clear glass with a visible light transmittance of 85%-93%, a green glass with a visible light transmittance of 73%-88%, a solar green glass with a visible light transmittance of 70%-85.5%, a light-gray or a dark green glass with a visible light transmittance of 25%-50%, or a dark-gray or a dark green glass with a visible light transmittance of ≤25%.

The thermoplastic interlayer 2 is interposed between the outer glass pane 1 and the inner glass pane 3 for bonding the second surface 12 and the third surface 31. The thermoplastic interlayer 2 may be a single layer or two or more layers; for example, when there are two or more layers, one of the layers has a higher plasticizer content and thus has a sound insulation function, or one of the layers has a wedge shape and thus has a head-up display (HUD) function. In addition, the thermoplastic interlayer may have other functions, such as providing at least one colored region to reduce the interference of sunlight on human eyes, or adding an infrared absorber to have a sun protection or heat insulation function.

The material of the thermoplastic interlayer 2 is selected from polycarbonate (PC), polyvinyl chloride (PVC), polyvinyl butyral (PVB), ethylene vinyl acetate (EVA), polyacrylate (PA), polymethylmethacrylate (PMMA), polyurethane (PUR), ionic polymer films (SGP), and the like, and more preferably polyvinyl butyral (PVB). For example, the material of the thermoplastic interlayer 2 is selected from one or more of a dark-colored PVB with a visible light transmittance of ≤10%, a light-colored PVB with a visible light transmittance of 10%-70%, and a colorless PVB with a visible light transmittance of ≥70%. The thermoplastic interlayer 2 may be colored as a whole to form a colored region or may be partially colored to form a colored region. Furthermore, the color of the colored region may be gray, green, blue, or brown, preferably gray or green, and more preferably gray.

The thermoplastic interlayer 2 has a thickness of 0.3 mm-2.3 mm, for example 0.38 mm, 0.51 mm, 0.76 mm, 1.9 mm (three layers in total, each having a thickness of 0.76 mm, 0.38 mm and 0.76 mm, respectively), 1.52 mm (three layers in total, each having a thickness of 0.76 mm, 0.38 mm and 0.38 mm, respectively), and the like, more preferably 0.38 mm or 0.76 mm, and further preferably 0.76 mm.

As shown in FIG. 4, the laminated glass of the present invention is used as a front windshield with a colored region; the light transmitting functional region 52 is mounted with a camera 6, at which the top edge size of the outer glass pane 1 is larger than that of the inner glass pane 3, and the edge part extends beyond that of the inner glass pane 3 to form a single-layered glass region 51, and d2 is the height of the window of the camera 6. d1 is 20 mm-50 mm; d2 is 30 mm-80 mm; d3 is 3 mm-20 mm; and d = d1 + d2 + d3.

The thermoplastic interlayer 2 includes a colored region and a non-colored region; the material for the colored region 21 of the thermoplastic interlayer is a dark-colored PVB with a visible light transmittance of ≤10% or a light-colored PVB with a visible light transmittance of 10%-70%, which may have a shading effect, thereby reducing the interference of the sunlight on human eyes; the material for the non-colored region 22 of the thermoplastic interlayer is a colorless PVB with a visible light transmittance of ≥70%, which can ensure the driver's field of vision, without affecting driving safety. The width of the colored region 21 in the thermoplastic interlayer is t, and t starts from the outer boundary of the inner glass pane 3 to the upper boundary of the B region of the optical division. At this point, the colored region does not affect the light transmittance of the light transmitting functional region 52, thereby ensuring the functionality of the camera 6, a device working by transmitting the spectrum, which is the mounted thereon.

The outer glass pane 1 is a clear glass with a visible light transmittance of 85%-93%, a green glass with a visible light transmittance of 73%-88%, or a solar green glass with a visible light transmittance of 70%-85.5%, and such visible light transmittance may ensure that the light path of the camera passes through the outer glass pane 1 to ensure normal operation of the camera; the inner glass pane 3 is a clear glass with visible light transmission of 85%-93%, a green glass with visible light transmission of 73%-88%, or a solar green glass with visible light transmission of 70%-85.5%. The second masking layer may or may not be provided on the fourth surface 32 of the inner glass pane 3 as required.

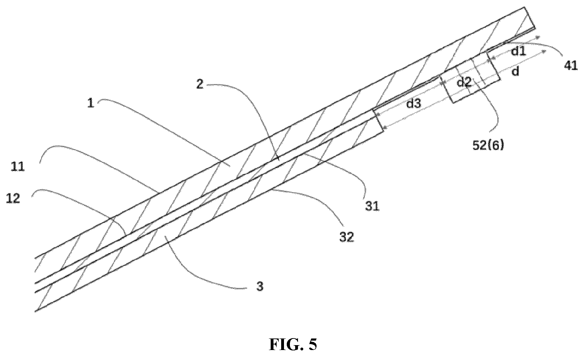

As shown in FIG. 5, when the laminated glass of the present invention is used as a rear windshield, and the light transmitting functional region 52 is mounted with a camera and/or brake light 6. d1 is 10 mm-50 mm, d2 is 10 mm-35 mm, and d3 is 3 mm-10 mm.

When the light transmitting functional region 52 is mounted with a camera, the outer glass pane 1 is a clear glass with a visible light transmittance of 85%-93%, a green glass with a visible light transmittance of 73%-88%, or a solar green glass with a visible light transmittance of 70%-85.5%; such visible light transmittance may ensure that the light path of the camera passes through the outer glass pane 1 to ensure normal operation of the camera.

When the light transmittance functional region 52 is mounted with a brake light, the outer glass pane 1 is a clear glass with a visible light transmittance of 85%-93%, a green glass with a visible light transmittance of 73%-88%, a solar green glass with a visible light transmittance of 70%-85.5%, a gray glass or a dark green glass with a visible light transmittance of 25%-40%, or a light-gray or a dark green glass with a visible light transmittance of 40%-65%.

The material of the thermoplastic interlayer 2 is a dark-colored PVB with a visible light transmittance of ≤10%, a light-colored PVB with a visible light transmittance of 10%-70%, or colorless PVB with a visible light transmittance of ≥70%.

The inner glass pane 3 is a clear glass with a visible light transmittance of 85%-93%, a green glass with a visible light transmittance of 73%-88%, a solar green glass with a visible light transmittance of 70%-85.5%, a gray glass or a dark green glass with a visible light transmittance of 25%-50%, or a dark-gray or a dark green glass with a visible light transmittance of ≤25%.

When the thermoplastic interlayer 2 is a colored PVB with a visible light transmittance of ≤70%, the inner glass pane 3 is a colored glass or a clear glass with a visible light transmittance of ≥70%, preferably a green glass with a visible light transmittance of 73%-88%, and more preferably a solar green glass with a visible light transmittance of 70%-85.5%.

When the thermoplastic interlayer 2 is a colorless PVB with visible light transmittance ≥70%, the inner glass pane 3 is a colored glass with visible light transmittance ≤70%, and preferably a gray glass or a dark green glass with a visible light transmittance of 25%-50%; the second masking layer may or may not be provided on the fourth surface 32 of the inner glass pane 3 as required.

### Example 1

This example provides a specific laminated glass combination as a front windshield with a colored region.

The laminated glass combination:
2.6 SG (a solar green glass having a thickness of 2.6 mm as the outer glass pane) + 0.76 PVB (a film with a colored region having a thickness of 0.76 mm) + 1.1 C (a clear glass of 1.1 mm as the inner glass pane); and the first masking layer is ink.

In this example, d1 = 20 mm, d2 = 65 mm, d3 = 10 mm, such that d = d1 + d2 + d3 = 95 mm; the colored region starts from the edge part of the inner glass pane 3 to the upper boundary of the visible region B of the glass; the upper boundary of the region B is 150 mm away from the boundary of the outer glass pane, such that the width of the colored region is 150 mm - 95 mm = 55 mm.

The laminated glass of the present example has an overall thickness of 4.46 mm, wherein the thickness of the single-layered glass region is 2.6 mm, and an optical component such as a camera or sensor is mounted on the single-layered glass region of 2.6 mm. The single-layered glass region has less optical distortion relative to the stacked arrangement of the outer glass pane and the inner glass pane, which can improve the imaging effect of the optical component.

The camera region (i.e., the light transmitting functional region 52) and the view region (i.e., the region corresponding to the non-colored thermoplastic interlayer) have visible light transmittances of 76%-80%, wherein the camera region and the view region have higher visible light transmittances, which ensures that the optical component and the driver can receive image information from the external more clearly to avoid blocking the driver's field of vision or affecting imaging resolution of the optical component due to an excessive low visible light transmittance.

The colored region has a visible light transmittance of 5%-30%, wherein the colored region has a lower visible light transmittance, which prevents harsh external light from affecting the driver's normal field of vision and has the effect of preventing glare.

### Example 2

This example provides a specific laminated glass combination as a front windshield with a colored region.

The laminated glass combination:
3.2 SG (a solar green glass having a thickness of 3.2 mm as the outer glass pane) + 0.76 PVB (a film with a colored region having a thickness of 0.76 mm) + 1.1 C (a clear glass of 1.1 mm as the inner glass pane); and the first masking layer is ink.

In this example, d1 = 25 mm, d2 = 60 mm, d3 = 15 mm, such that d = d1 + d2 + d3 = 100 mm; the colored region starts from the edge part of the inner glass pane 3 to the upper boundary of the visible region B of the glass; the upper boundary of the region B is 155 mm away from the boundary of the outer glass pane, such that the width of the colored region is 155 mm - 100 mm = 55 mm.

The laminated glass of the present example has an overall thickness of 5.06 mm, wherein the thickness of the single-layered glass region is 3.2 mm, and optical component such as a camera or sensor is mounted on the single-layered glass region of 3.2 mm. The single-layered glass region has less optical distortion relative to the stacked arrangement of the outer glass pane and the inner glass pane, which can improve the imaging effect of the optical component.

The camera region and the view region have visible light transmittances of 71%-75%, wherein the camera region and the view region have higher visible light transmittance, which ensures that the optical component and the driver can receive image information from the external more clearly to avoid blocking the driver's field of vision or affecting imaging resolution of the optical component due to an excessive low visible light transmittance.

The colored region has a visible light transmittance of 5%-30%, wherein the colored region has a lower visible light transmittance, which prevents harsh external light from affecting the driver's normal field of vision and has the effect of preventing glare.

### Example 3

This example provides a specific laminated glass as a rear windshield with a colored region.

The glass combination:
2.6 SG (a solar green glass having a thickness of 3.2 mm as the outer glass pane) + 0.76 PVB (a conventional PVB without colored region having a thickness of 0.76 mm) + 1.6 dark green (a dark green glass of 1.6 mm as the inner glass pane).

In this example, d1 = 15 mm, d2 = 10 mm, d3 = 5 mm, such that d = d1+d2+d3 = 30 mm.

In this example, the laminated glass has an overall thickness of 4.96 mm, wherein the thickness of the single-layered glass region is 2.6 mm, and optical component such as a camera, sensor or brake light is mounted on the single-layered glass region of 2.6 mm. The single-layered glass region has less optical distortion relative to the stacked arrangement of outer glass pane and inner glass pane, which can improve the imaging effect of the optical components or the light transmission effect of the brake light, such that vehicles behind are able to observe more clearly whether the brake light is on or not.

The camera or the brake light region (light transmission function region 52) has a visible light transmission of 75%-80%, wherein the camera or the brake light region has a higher visible light transmission to ensure that the optical component such as the camera or the brake light can receive image information from the external or transmit optical signals to the outside more clearly, while the view region has a higher visible light transmission to facilitate the driver to more clearly observe the status of vehicles behind the view region of the rear windshield through the rearview mirror.

The other regions have a visible light transmission of 35%-45%, wherein the other regions have a lower visible light transmission, which can achieve an effect of preventing prying eyes and protecting the privacy of the driver and passengers.

### Example 4

This provides a specific laminated glass as a rear windshield with a colored region.

The glass combination:
3.5 C (a 3.5 mm thick clear glass as the outer glass pane) + 0.76 PVB (a 0.76 mm thick gray PVB ) + 1.1 C (a 1.1 mm thick clear glass as the inner glass pane).

In this example, d1 = 20 mm, d2 = 15 mm, and d3 = 8 mm, such that d = d1+d2+d3 = 43 mm.

In this example, the laminated glass has an overall thickness of 5.36 mm, wherein the thickness of the single-layered glass region is 5.36 mm, and optical component such as a camera, sensor or brake light is mounted on the single-layered glass region of 5.36 mm. The single-layered glass region has less optical distortion relative to the stacked arrangement of outer glass pane and inner glass pane, which can improve the imaging effect of the optical components or the light transmission effect of the brake light, such that vehicles behind are able to observe more clearly whether the brake light is on or not.

The camera or the brake light region has a visible light transmission of 88%-92%, wherein the camera or the brake light region has a higher visible light transmission to ensure that the optical component such as the camera or the brake light can receive image information from the external or transmit optical signals to the outside more clearly, while the view region has a higher visible light transmission to facilitate the driver to more clearly observe the status of vehicles behind the view region of the rear windshield through the rearview mirror.

The other regions have a visible light transmission of 15%-25%, wherein the other regions have a lower visible light transmission, which can achieve an effect of preventing prying eyes and protecting the privacy of the driver and passengers.

Obviously, the above embodiments of the present invention are only examples for the purpose of clearly illustrating the present invention, and are not intended to be a limitation of the embodiments of the present invention. For the person of ordinary skilled in the art, other different forms of changes or variations can be made on the basis of the above description. It is not possible herein to exhaust all the embodiments, and any obvious changes or variations that are derived from the technical solutions of the present invention are still within the protection scope of the present invention.

## Claims

1. A laminated glass with different visible light transmittances, wherein the laminated glass comprises an outer glass pane (1), a thermoplastic interlayer (2), and an inner glass pane (3);
the outer glass pane (1) has a first surface (11) and a second surface (12) opposite to each other; the inner glass pane (3) has a third surface (31) and a fourth surface (32) opposite to each other;
the thermoplastic interlayer (2) is interposed between the outer glass pane (1) and the inner glass pane (3) for bonding the second surface (12) and third surface (31);
at least a portion of the edge part of the outer glass pane (1) extends beyond the inner glass pane (3), and the extended portion is a single-layered glass pane region (51); and the single-layered glass region (51) comprises at least a light transmitting functional region (52).

2. The laminated glass according to claim 1, wherein the single-layered glass region (51) is provided with a first masking layer (41) on the second surface (12) other than the light transmitting functional region (52); and
a second masking layer (42) is provided on the third surface (31) and/or the fourth surface (32) of the inner glass pane (3).

3. The laminated glass according to claim 1, wherein the single-layered glass region (51) is provided with a first masking layer (41) on the second surface (12) other than the light transmitting functional region (52); and
a second masking layer (42) is not provided on the third surface (31) and/or the fourth surface (32) of the inner glass pane (3).

4. The laminated glass according to claim 2 or 3, wherein the material for the first masking layer (41) and the second masking layer (42) is ceramic ink or UV ink.

5. The laminated glass according to claim 2 or 3, wherein the first masking layer (41) and second masking layer (42) have a visible light transmittance of ≤1.5% and a UV transmittance of ≤0.05%.

6. The laminated glass according to claim 1, wherein at least a portion of the edge part at one side of the outer glass pane (1) extends beyond the inner glass pane (3) to form the single-layered glass region (51).

7. The laminated glass according to claim 1, wherein in the single-layered glass region (51), in a direction from the edge of the outer glass pane (1) to the edge of the inner glass pane (3), the distance from the edge of the outer glass pane (1) to the edge of the inner glass pane (3) is d, the distance from the edge of the outer glass pane (1) to the outer edge of the light transmitting functional region (5) is d1, the distance from the outer edge to the inner edge of the light transmitting functional region (5) is d2, and the distance from the inner edge of the light transmitting functional region (5) to the edge of the inner glass pane (3) is d3; and d = d1 + d2 + d3.

8. The laminated glass according to claim 7, wherein d1 is 10 mm-150 mm, d2 is 20 mm-150 mm, and d3 is 0-50 mm.

9. The laminated glass according to claim 7 or 8, wherein d1 is 20 mm-50 mm or 10 mm-50 mm.

10. The laminated glass according to claim 7 or 8, wherein d2 is 30 mm-80 mm or 10 mm-35 mm.

11. The laminated glass according to claim 7 or 8, wherein d3 is 3 mm-20 mm or 3 mm-10 mm.

12. The laminated glass according to claim 1, wherein the laminated glass comprises a colored region (7) located in a region not overlapping with the single-layered glass region (51).

13. The laminated glass according to claim 12, wherein the colored region (7) is located in a part of the thermoplastic interlayer (2).

14. The laminated glass according to claim 13, wherein the material for the colored region (21) in the thermoplastic interlayer is a dark-colored PVB with a visible light transmittance of ≤10% or a light-colored PVB with a visible light transmittance of 10%-70%; and the material for the non-colored region (22) in the thermoplastic interlayer is a colorless PVB with a visible light transmittance of ≥ 70%.

15. The laminated glass according to claim 1, wherein both the outer glass pane (1) and the inner glass pane (3) have been subjected to hot bending molding at 500°C or higher.

16. The laminated glass according to claim 1, wherein the thickness of the outer glass pane (1) is ≥ 1.6 mm, and the thickness of the inner glass pane (3) is 0.7 mm-2.6 mm; and the thickness of the outer glass pane is greater than the thickness of the inner glass pane.

17. The laminated glass according to claim 1, wherein the outer glass pane (1) is selected from a transparent glass with a visible light transmittance of 85%-93%, a green glass with a visible light transmittance of 73%-88%, a solar green glass with a visible light transmittance of 70%-85.5%, and a light-gray or dark-green glass with a visible light transmittance of 25%-50%.

18. The laminated glass according to claim 1, wherein the inner glass pane (3) is selected from a transparent glass with a visible light transmittance of 85%-93%, a green glass with a visible light transmittance of 73%-88%, a solar green glass with a visible light transmittance of 70%-85.5%, a light-gray or dark-green glass with a visible light transmittance of 25%-50%, and a dark-gray or dark-green glass with a visible light transmittance of ≤25%.

19. The laminated glass according to claim 1, wherein the thickness of the thermoplastic interlayer (2) is 0.3 mm-2.3 mm.

20. The laminated glass according to claim 1, wherein both the outer glass pane (1) and the inner glass pane (3) are non-tempered glass.
